# EUROPEAN PATENT APPLICATION

(11) **EP 4 368 528 A1**
(43) Date of publication of application: **15.05.2024**
(21) Application number: 22206832.2
(22) Date of filing: 11.11.2022
(51) Int. Cl.: B65D 1/26, B65D 1/28, B65D 65/46, B65D 85/804

(54) **NUTRITIONAL CONTAINER; AND BEVERAGE PREPARATION SYSTEM**

(71) Applicant: B&T Entwicklungs- und Vermarktungsgesellschaft mbH, 22297 Hamburg (DE)
(72) Inventor: The designation of the inventor has not yet been filed
(74) Representative: Frei Patent Attorneys

(57) **Abstract**

According to an aspect of the present invention, a nutritional container (1) for enclosing or holding a nutrition product is provided. The container may be a beverage capsule and contain a beverage preparation substance, especially an extraction material such as ground coffee or crushed tea leaves. It comprises a container wall comprising a multilayer with at least one layer comprising a biodegradable material. At least one layer of the container wall comprises a predetermined breaking point (21). By being damaged at the predetermined breaking point, the container is prepared for a subsequent biodegradation process even if the container is not mechanically pretreated (shredded) for a for example industrial composting process.

## Description

The present invention is in the field of nutritional containers, for example portion capsules for preparing a beverage, with an such as coffee powder or crushed tea leaves, or receptacles for beverages, such as cups or similar.

Of special interests are containers that comprise a wall of a biodegradable material, because of sustainability considerations However, it is a challenge to provide biodegradable materials having the required properties. Required properties include a sufficient mechanical stability, at room temperature and often also at an elevated temperature in the case of a hot beverage or hot foodstuff to be prepared or contained. Further, the property of providing a liquid barrier, often in combination with the property of providing an oxygen barrier, may be important. If the container is a beverage capsule, also the capability of being pierced for liquid injection into the capsule and for liquid removal from the capsule is desired. Because biodegradable materials having all these properties are not readily available, it has been proposed to make the container from a polymer multilayer that has a plurality of layers of different compositions. For example, one layer can be an efficient water barrier whereas another one of the layers can act as oxygen barrier, and/or at least one layer ensures the sufficient mechanical stability, whereas at least one other layer has the barrier properties, etc.

However, such a multilayer may lead to a delayed biodegradation process, because in the complex biodegradation process, the outer layers are accessible only from the outer side, and for biodegradation of inner layers, first the outer layers need to be disintegrated.

It is therefore an object of the present invention to provide a container, for example capsule or receptacle, overcoming drawbacks of the prior art and leading to an improved biodegradability. It is a further object to provide a capsule-based system for preparing beverages with a capsule of this kind.

This object is achieved by the invention as defined in the claims.

According to an aspect of the present invention, a nutritional container for enclosing or holding a nutrition product is provided, the container comprising a container wall with a multilayer that has at least one layer comprising a biodegradable material. At least one layer of the container wall comprises a predetermined breaking point.

The container may be a beverage capsule, the capsule containing a beverage preparation substance, especially an extraction material such as ground coffee or crushed tea leaves. Alternatively, the container may be a different nutritional container, such as a receptacle for holding a beverage (cup, bottle, etc.), a package for convenience food, etc.

By being damaged at the predetermined breaking point, the container is prepared for a subsequent biodegradation process even if the container is not mechanically pretreated (shredded) for a for example industrial composting process. The damage to the container at the predetermined breaking point enhances the surface for liquid and microbes to act upon the material of the container wall and especially provides access to inner layers of the multilayer. For example, if the capsule wall has a sandwich structure with two outer layers of a material with a relatively slow biodegradation and an inner layer of a different material, the approach according to the present invention makes possible that the inner layer is subject to disintegration from the very beginning of the biodegradation process by not being protected by the outer layers, due to the damage(s) caused. As a result, also the biodegradation of the outer layers, which may be more difficult to disintegrate, may be more efficient and quicker in that these layers may get into contact with liquid and microbes from both sides.

The container wall comprises a multilayer being a multilayer of polymer materials, possibly with one or more non-polymeric fillers. At least one of the layers, especially all of the layers, is/are bio-degradable. In embodiments, the container wall may comprise a sandwich structure with two outer layers and at least one inner layer between the outer layers.

The designation "outer layer" when relating to the layered structure of the multilayer in this text refers to the build of the multilayer structure itself. In the container, one of the outer layers will be oriented towards the container interior, whereas the other one of the outer layers will, relating to container capsule, form an exterior layer and constitute the container surface.

Bio-degradable layers for the container may for example comprise a polymer on the basis of poly(vinyl alcohol) (PVOH), cellulose-ether polymer, Butenediol-VinylAlcohol-Copolymer (BVOH), Polyvinyl butyral (PVB) and/or Ethylene-VinylAlcohol-Copolymers (EVOH), Polyhydroxybutyrate (PHB), a suitable polyester a polylactide, etc. or any other suitable polymer material that has the property of being bio-degradable.

In the present text, "bio-degradable" may mean biologically degradable according to the European standard EN 13432 (as of the end of 2021). In addition or as an alternative, it may mean biologically degradable according to the European standard EN 14995 (as of the end of 2021). Thus "bio-degradable" especially refers to "biologically degradable according to EN 13432 and/or according to EN 14995".

The predetermined breaking point may be located at any suitable position on the container. In embodiments, it extends along a line around the container. Especially, the container may comprise a plurality of the predetermined breaking points.

The predetermined breaking point may be in one provided in one layer only, in the two outer layers of a sandwich structure, or it may be provided in any subset of layers of the multilayer, including the possibility that the predetermined breaking point extends through the entire container wall.

The predetermined breaking point may have any suitable structure that causes the wall (or at least one layer thereof) to break (first) at the location of the predetermined breaking point if the container is subject to a mechanical force.

The predetermined breaking point may for example comprise one or more of:
- A notch.
- An arrangement of voids (limited to an interior of one or more of the layers, extending to the surface but not fully through the respective layer, or extending through at least one layer, thus constituting a perforation).
- Abrasive particles dispersed, along the predetermined breaking point(s), in at least one of the layers. The particles are for example harder than the plastic material around them and have sharp features such as corners or edges. When the container is subject to mechanical load, the abrasive particles damage the plastic material around them so that the container breaks first at their locations.

In a group of embodiments, the predetermined breaking point has a directional characteristic in that the container wall (or at least one layer thereof) tends to rupture if a force acts in a primary direction whereas the mechanical stability is not substantially influenced, or influenced to a lesser extent, by the predetermined point if a force acts in a secondary, orthogonal direction. For example, if the container is a cup, the predetermined breaking point may be so that the stability with respect to radial forces is not substantially influenced, whereby there is no risk of breaking the container wall (or layer thereof) when the cup is filled and is just being held manually, in the usual manner. The predetermined breaking point may, however, be such that if the cup is subject to axial forces (it is crushed, for example by a pressing force on its upper rim), it breaks at the predetermined breaking point. Similarly, if the container is a beverage capsule, the predetermined breaking point may be such that the capsule is stable with respect to forces that act during transportation and/or handling but may be ruptured by forces acting when the capsule is ejected from the brewing chamber after use, etc.

Especially in such embodiments, the predetermined breaking point may comprise one or more of:
- Oriented abrasive particles. Such oriented abrasive particles may for example have needle-like structures and may for example lie parallel to the plane defined by the capsule wall. In this orientation, they tend to damage the capsule especially if forces in a particular direction act, for example in-plane forces/shear forces.
- A rupture line (in three dimensions it will be a rupture plane) that is skew with respect to the plane defined by the capsule wall and different from perpendicular thereto. Similar to the oriented abrasive particles, the capsule wall along such rupture line is unsusceptible to vertical forces but yields a tendency to rupture if the capsule is subject to shear forces.

The invention also concerns a beverage preparation system that comprises a capsule being a container of the described kind with a multilayer that comprises at least one layer of biodegradable material and that comprises at least one predetermined breaking point.

In addition to the capsule, the beverage preparation system also comprises a machine that is configured to brew, using the capsule and water injected thereinto, a beverage. Such a beverage preparation system usually comprises a brewing chamber where the capsule is contained when the liquid (water) is injected into the capsule, and is equipped to allow the thus prepared beverage to flow out of the capsule.

Especially, the system comprising the capsule may be equipped for breaking at least one layer of the capsule at the predetermined breaking point in the course of the brewing process, as a result of heat input by the liquid being injected and/or of mechanical forces acting on the capsule during the brewing process or after the brewing process, when the capsule is ejected from a brewing chamber in which it is seated during the brewing process.

For example, the material of the layer(s) with the predetermined breaking point may be such that it is mechanically stable at room temperature but that it is weak enough to break upon application of a moderate force when it is at the temperature of the injected hot water. Then, the system may be such that the layer(s) with the predetermined breaking point breaks/break during the brewing process (for example as a result of the pressure arising during the brewing process, for example towards the end of the brewing process) and/or such that the layer(s) with the predetermined breaking point breaks/break as a result of the forces acting when the capsule is ejected from the brewing chamber, by a corresponding mechanism.

Hereinafter, embodiments of the present invention are described with reference to drawings. In the drawings, same number designate same or corresponding elements. The drawings show:
- Fig. 1: An example of a capsule;
- Fig. 2: a multilayer structure for the capsule;
- Fig. 3: the multilayer structure with examples of predetermined breaking points;
- Fig. 4: the capsule with predetermined breaking points;
- Fig. 5: a detail of the capsule with alternative predetermined breaking points;
- Fig. 6: a brewing module of a coffee machine for the capsule of Figs. 1-5;
- Fig. 7: a coffee machine;
- Fig. 8: an alternative brewing module with an alternative, cup-shaped capsule; and
- Fig. 9: an alternative container, namely a cup.

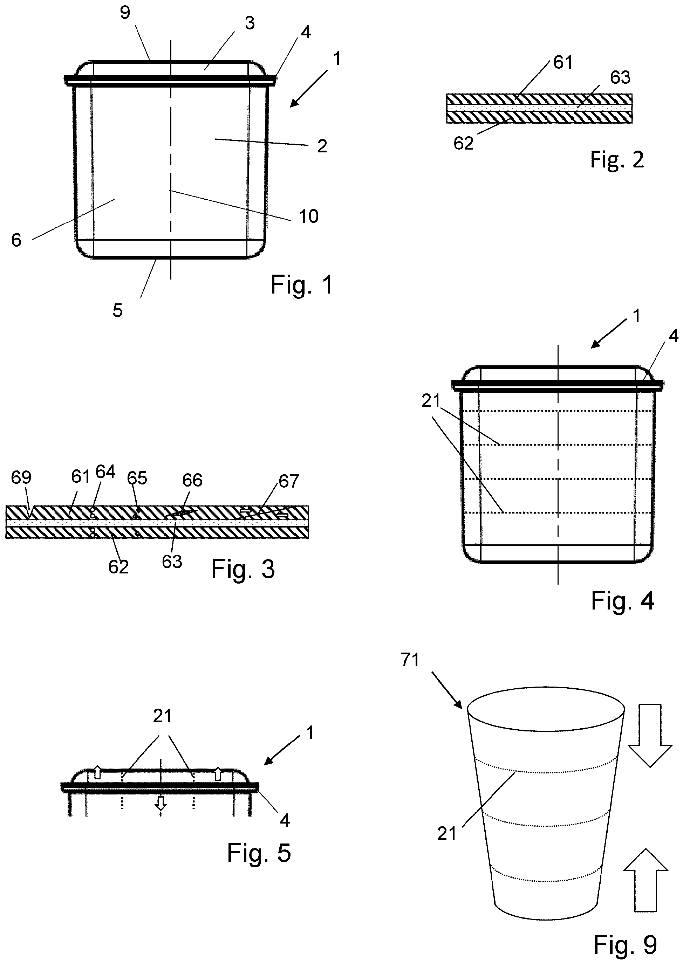

**Figure** 1 illustrates an example of a beverage capsule. The capsule 1 according to Fig. 1 essentially has the shape of a cube with rounded edges, with an expanse slightly increasing towards the side lying at the top.

The capsule comprises a main body 2 and a cover 3 which is fastened thereon along a peripheral collar 4. The main body forms a capsule bottom 5 and a peripheral side wall 6 which, at its end which is at the outside with respect to the axial directions (axis 10) and which is at the top in the figure, is terminated by the collar 4. The cover is arched outwards, by way of the cover surface 9 which is essentially parallel to the capsule bottom 5 being offset outwards with respect to the peripheral collar 4.

The capsule is configured to be pierced, for the brewing process, for the purpose of injecting a liquid, especially hot water, into the capsule and for allowing the thus brewed beverage to flow out of the capsule.

**Figure 2** illustrates a layered structure of the capsule wall. The capsule wall having the layered structure can constitute the main body and/or the cover. The multilayer in the depicted embodiment is illustrated to have two outer layers 61, 62 of a first biodegradable material and in inner layer 63 of a second biodegradable material. The first biodegradable material may serve as a liquid barrier by having corresponding properties, whereas the second biodegradable material may serve as an oxygen barrier.

**Figure 3** illustrates examples how the predetermined breaking point(s) can be realized (from left to right):
- A notch 69.
- Voids 64 which, however, do not extend completely through one of the layers so that the respective layer still has barrier properties. The respective layer(s) is/are weakened by the voids 64, so that when a mechanical force acts on the capsule, the layers break first at the location(s) of the void. Instead of voids not extending through one of the layers, voids that do extend through one of the layers may be present, thus a perforation of the respective layer.
- Abrasive particles 65 dispersed, along the predetermined breaking point(s), in at least one of the layers. The particles are for example harder than the (for example biodegradable) plastic material around them and have sharp features such as corners or edges.
- Oriented abrasive particles 66. Such oriented abrasive particles 66 may for example have needle-like structures and may for example lie parallel to the plane defined by the capsule wall. Their function is similar to the one of abrasive particles 65 without any defined orientation. However due to their shape and orientation, they tend to damage the capsule especially if forces in a particular direction act, for example in-plane forces/shear forces. This may be advantageous if the mechanical stability during capsule transport and handling is an issue.
- A rupture plane 67, which is skew with respect to the plane defined by the capsule wall and different from perpendicular thereto. Similar to the oriented abrasive particles 66, the capsule wall along such rupture line is unsusceptible to vertical forces, as may act if capsules bump into each other during transportation, but yields a tendency to rupture if the capsule is subject to shear forces, which may for example be present after a brewing process when the capsule is pulled away from the piercing devices. The block arrows illustrate a squeezing shear force.

A capsule may comprise one kind of predetermined breaking points, for example as illustrated in Fig. 3, or a combination thereof, for example abrasive particles 65 along a contour, combined with oriented abrasive particles 66 and/or a rupture line 67 at a position where shear forces are to be expected when the capsule is removed from the brewing chamber.

**Figure** 4 schematically illustrates the possibility of there being a plurality of predetermined breaking points 21, each extending along a line. The lines extend around the main body 2 of the capsule.

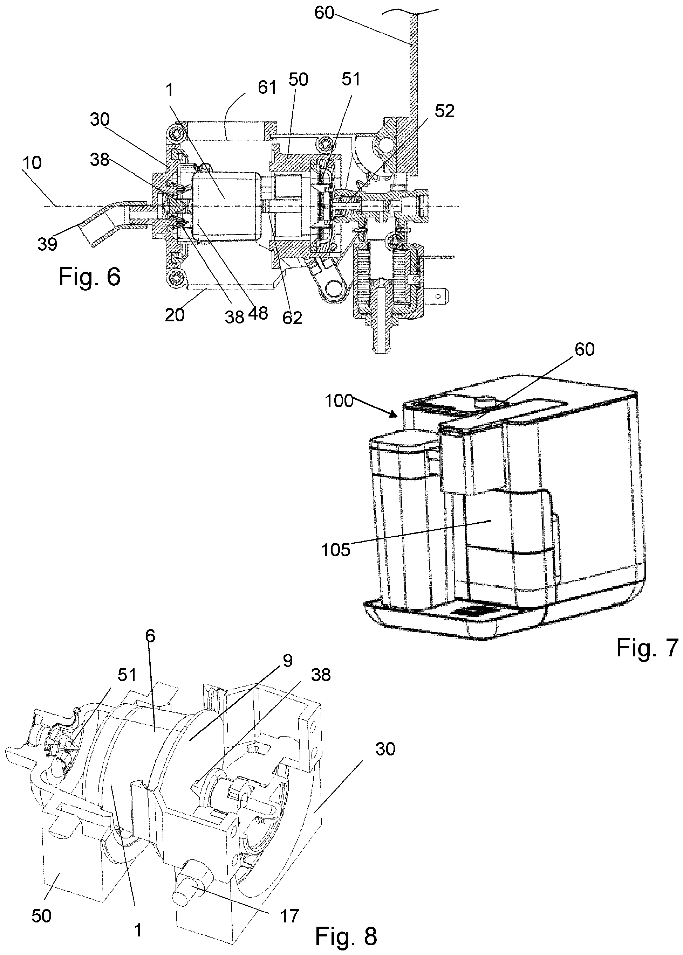

**Figure 5** shows an alternative: The predetermined breaking points 21 extend vertically along the cover 3 and main body 2, in a region next to the collar 4. The block arrows illustrate how during ejection of the capsule a shear force may act next to the predetermined breaking points, as is illustrated with respect to Fig. 6 described hereinafter.

**Figure 6** illustrates an example of an accordingly equipped brewing module of a beverage preparation machine, for example coffee machine. The brewing module comprises a brewing module housing 20 and, held and guided by the housing, a discharge device 30 as a first brewing module part, and an injector 50 as a second brewing module part. By way of an operating lever 60, the injector 50 can be moved relative to the housing and to the first brewing module part, between an open position, in which the brewing chamber is open and the operating lever is at the top and a closure position, in which the brewing chamber is closed and the operating lever is folded downwards. Fig. 2 shows the brewing module with the brewing chamber being open and with the capsule 1. The capsule has been inserted through an insert opening 61 which also defines the orientation of the capsule on insertion.

For operation, the brewing chamber is closed by the injector 50 moving towards the discharge device 30 so that the capsule 1 is pierced by injection-side piercing devices 51 and extraction-side piercing devices 38. The brewing liquid flows through a duct 52 and the pierced cut-outs into the capsule 1, where an extraction process takes place. The thus brewed beverage flows out through the extraction-side break throughs caused by the extraction-side piercing devices 38 and an outlet spout 39.

When the brewing chamber is opened after the brewing process, a retrieval device 62 acts to pull the capsule away from the extraction-side piercing device by engaging the peripheral collar 4 when the injector 50 is moved away from the discharge device 30, substantially as described in more detail in WO 2015/048914. As becomes clear from Fig. 7, the retrieval device pulls on the peripheral collar 4 in a central region, whereas guide rails act closer to the corners, so that the capsule is subject to forces acting as illustrated by the block arrows in Fig. 5, whereby predetermined breaking points 21 as shown in Fig. 5, especially with directional characteristics may cause the capsule wall to be disrupted.

The described brewing module is a manually operated horizontal brewing module adapted to the capsule shape of Fig. 1. Many variants of brewing modules are known in the art, including motorized brewing modules, vertical brewing modules (where the liquid is injected from the top and flows out of the bottom of the capsule), brewing modules for other capsule shapes, etc. The present invention can be implemented for all kinds of capsule shapes and all types of brewing modules.

**Figure 7** illustrates a beverage preparation machine 100, namely a coffee machine, that contains a brewing module of the kind illustrated in Fig. 2. Underneath the brewing module, the coffee machine comprises a container 105 for used capsules. The brewing module is equipped for allowing the used capsules to fall down into the container 105 when the brewing chamber is opened after the brewing process.

According to embodiments of the present invention, the beverage preparation machine is equipped cause a rupture of at least a layer of the capsule wall along the predetermined breaking points by the movement of the brewing module parts when the brewing chamber is opened and/or by the movement of the capsule down into the container 105.

**Figure 8** illustrates a brewing module for a cup-shaped capsule 1 with a round cross section and an accordingly annular circumferential capsule wall 6. The considerations, including the ones referring to Fig. 7, also apply to capsules having such or other shapes.

**Figure 9****,** finally illustrates a different kind of container, namely a cup. If the predetermined breaking points 21 - illustrated to extend along horizontal circles around the periphery of the cup wall - have a directional characteristic, they may for example be a tendency to rupture when the cup is subject to an axial force (as shown by the block arrows in Fig. 9) whereas they are stable with respect to radial forces so that the user may crush the cup after use and thereby not only reduce the space required but also accelerate the biodegradation process.

In the present context, the bottom of the cup, which is not visible in Fig. 9, is considered to belong to the container wall in the sense of the present text, and it may optionally also have a predetermined breaking point.

## Claims

1. A nutritional container for enclosing or holding a nutrition product, the container comprising a container wall comprising a multilayer having a plurality of layers, with at least one of the layers comprising a biodegradable material, **characterized in that** at least one of the layers comprises a predetermined breaking point (21).

2. The container according to claim 1, wherein the predetermined breaking point (21) extends along at least one line around the container wall.

3. The container according to claim 1 or 2, comprising a plurality of predetermined breaking points (21).

4. The container according to any one of the previous claims, wherein the predetermined breaking point (21) comprises a notch (69), an arrangement of voids (64) and/or abrasive particles (65) dispersed within polymer material of the container wall.

5. The container according to any one of the previous claims, wherein the predetermined breaking point (21) has a directional characteristic in that at least one layer of the container wall tends to rupture if a force acts in a primary direction whereas the mechanical stability is not substantially influenced, or influenced to a lesser extent, by the predetermined point if a force acts in a secondary direction orthogonal to the primary direction.

6. The container according to claim 5, wherein the predetermined breaking point comprises at least one of oriented abrasive particles, (66) a rupture line (67).

7. The container according to any one of the previous claims, wherein container wall consists of biodegradable material.

8. The container according to any one of the previous claims being a beverage capsule (1) containing a beverage preparation substance.

9. A beverage preparation system, comprising the beverage capsule according claim 8, and further comprising a beverage preparation machine (100) configured to brew, using the beverage capsule (1) and water injected thereinto, a beverage in a brewing process.

10. The beverage preparation system according to claim 9, being equipped for breaking at least one layer of the capsule wall at the predetermined breaking point in the course of the brewing process, as a result of heat input by the water being injected and/or of mechanical forces acting on the beverage capsule during the brewing process or after the brewing process, when the capsule is ejected from a brewing chamber in which it the capsule seated during the brewing process.
